# FASCICULE DE BREVET EUROPEEN

(11) **EP 0 684 001 B1**
(45) Date de publication et mention de la délivrance du brevet: **08.07.1998**
(21) Numéro de dépôt: 95420131.5
(22) Date de dépôt: 23.05.1995
(51) Int. Cl.: A47J 27/09

(54) **Dispositif de sécurité pour récipient sous pression comportant un joint d'étanchéité à section affaiblie**
Sicherheitsvorrichtung für Druckgefäss mit abschnittsweise geschwächtem Dichtring
Safety device for pressure vessel comprising a gasket with weakening indentations

(30) Priorité: 27.05.1994 FR 9406727
(43) Date de publication de la demande: 29.11.1995
(73) Titulaire: SEB S.A., 69130 Ecully (FR)
(72) Inventeur: Lombardo, Antoine, F-21120 Is sur Tille (FR)

(56) Documents cités:
- EP-A- 0 210 914
- CH-A- 404 908
- CH-A- 571 335
- FR-A- 1 421 925
- US-A- 2 600 714

## Description

La présente invention se rapporte au domaine technique général des appareils de cuisson à la vapeur en atmosphère fermée tels que des autocuiseurs par exemple, dans lesquels le couvercle est verrouillé sur la cuve de manière étanche par l'intermédiaire d'un joint périphérique d'étanchéité.

La présente invention concerne un dispositif de sécurité à limitation de pression automatique pour récipient sous pression comportant un joint d'étanchéité interposé entre la cuve du récipient et le couvercle, ledit joint comportant au moins une portion de longueur présentant un dégagement externe formant une section transversale affaiblie pour permettre une déformation du joint dans la portion sous l'action de la pression interne de fonctionnement à partir d'une valeur prédéterminée assurant un défaut d'étanchéité et la dépressurisation du récipient.

La présente invention concerne également un récipient sous pression, et en particulier un autocuiseur, équipé d'un dispositif de sécurité conforme à l'invention.

Dans les récipients de cuisson à la vapeur fonctionnant en atmosphère fermée, tels que les autocuiseurs, il est nécessaire de prévoir un dispositif de sécurité capable d'assurer, en cas d'anomalie de fonctionnement du système principal de régulation de la pression, un échappement de vapeur à partir d'une pression préétablie correspondant à une pression de consigne.

Il est déjà connu dans les dispositifs de l'art antérieur, de monter en compression entre la cuve d'un récipient et le couvercle, un joint d'étanchéité assurant, lorsque le couvercle est verrouillé, par exemple par un dispositif de fermeture de type baïonnette, l'étanchéité complète du récipient. En cas de surpression et simultanément de défaillance du système de régulation de pression, le défaut d'étanchéité du joint est assuré par la déformation radiale et localisée du joint dans un espace formé par une rainure ou un embouti ménagé dans le bord ou la jupe périphérique du couvercle. La déformation du joint dans cet espace permet de créer un défaut d'étanchéité entre le rebord supérieur de la cuve et le joint lui-même, ce qui permet à la vapeur de s'échapper. De tels systèmes sont par exemple décrits dans le brevet US-A-2600703 et dans le brevet CH-A-407459.

On connaît également des systèmes de sécurité à dépressurisation automatique pour récipient sous pression tels que ceux décrits dans les brevets US-A-4276990 et GB-A-2208131. Ces systèmes prévoient l'interposition d'un joint d'étanchéité entre la cuve d'un récipient et son couvercle. Ils comportent en outre, une ouverture d'extrusion ménagée dans le couvercle, en particulier dans sa jupe périphérique.

En cas de surpression, le joint peut s'extruder à travers l'ouverture du couvercle de manière à créer une fuite de vapeur vers le bas entre les rampes de la cuve. L'extrusion du joint à travers l'ouverture du couvercle peut être favorisée en prévoyant de ménager un dégagement interne dans le joint, tel que décrit par exemple dans le CH-A-571335.

Un tel système peut être amélioré en prévoyant sensiblement au droit de l'ouverture d'extrusion, un trou de fluage à travers le couvercle. Dans un tel cas, lors de l'extrusion du joint à travers l'ouverture latérale du couvercle, la vapeur peut s'échapper par le couvercle, puisque le joint découvre alors le trou de fluage. Cette amélioration évite l'échappement de la vapeur vers le bas ce qui pourrait avoir pour effet d'éteindre la source de chauffage lorsque cette dernière est constituée par du gaz.

On connait également, par exemple par le brevet US-A-2600714, des dispositifs de sécurité à dépressurisation comportant un joint annulaire présentant un dégagement dans sa face externe. Un tel joint est monté sur un autocuiseur entre le couvercle et la cuve. Il présente une section transversale affaiblie et se déforme au niveau du dégagement externe en cas de surpression pour créer un défaut d'étanchéité.

L'ensemble des dispositifs de sécurité à dépressurisation automatique décrits précédemment remplissent généralement de manière satisfaisante la fonction de sécurité qui leur est assignée. Ils s'avèrent cependant impliquer un certain nombre d'inconvénients au premier rang desquels figure la nécessité d'une conception spécifique du couvercle. Ce dernier doit être en effet d'un profil adapté de manière localisée pour permettre au joint de se déformer lui-même localement soit dans des rainures, soit à travers des ouvertures d'extrusion. De tels aménagements du profil du couvercle introduisent des étapes supplémentaires dans le processus de fabrication industriel, et le rendent lui-même plus complexe dans la mesure où des contraintes et tolérances additionnelles sont impliquées. Le coût global de ces aménagements n'est par ailleurs pas négligeable, ce qui en définitive aboutit à une augmentation générale du coût final du produit. Par ailleurs, les joints connus sont souvent extrudés entre-rampes et la libération de vapeur s'effectue brutalement sans progressivité avec des risques de projection et d'extinction des feux.

L'objet de l'invention vise à remédier aux différents inconvénients énumérés précédemment et à fournir un dispositif de sécurité simplifié et de coût réduit, n'affectant pas la sécurité d'utilisation et de fonctionnement tout en permettant une libération faible et progressive du jet de vapeur.

Un autre objet de l'invention vise à fournir un dispositif de sécurité permettant de maîtriser la valeur de la pression de déclenchement du dispositif de sécurité.

Les objectifs assignés à l'invention sont atteints à l'aide d'un dispositif de sécurité à limitation de pression automatique pour récipient sous pression comportant un joint d'étanchéité interposé entre la cuve du récipient et le couvercle, ledit joint comportant au moins une portion de longueur présentant un dégagement externe formant une section transversale affaiblie pour permettre une déformation du joint dans la portion sous l'action de la pression interne de fonctionnement à partir d'une valeur prédéterminée pour assurer un défaut d'étanchéité et la dépressurisation du récipient caractérisé en ce que la section transversale affaiblie est formée par une association du dégagement externe et d'au moins une entaille interne.

D'autres particularités et avantages de l'invention apparaîtront et ressortiront plus en détail à la lecture de la description faite ci-après, en référence aux dessins annexés donnés à titre d'exemples illustratifs non limitatifs dans lesquels :
- La figure 1 montre selon une vue partielle en coupe d'un récipient sous pression, un dispositif de sécurité conforme à l'invention comportant un joint dans sa position d'étanchéité.
- La figure 2 montre, selon une vue en coupe partielle identique à celle de la figure, 1 un dispositif de sécurité conforme à l'invention comportant un joint d'étanchéité dans sa position de déformation.
- La figure 3 montre selon une vue partielle de dessus un dispositif de sécurité conforme à l'invention avec un joint d'étanchéité en position d'étanchéité.
- La figure 4 montre selon une vue de dessus identique à celle de la figure 3, un dispositif de sécurité conforme à l'invention comportant un joint selon une position de déformation identique à celle de la figure 2.
- Les figures 5 et 6 montrent des détails de réalisation de la section transversale d'un joint d'étanchéité conforme à l'invention correspondant respectivement aux lignes V-V, et VI-VI de la figure 3.

Dans la description qui suit, le récipient sous pression sur lequel est monté un dispositif de sécurité conforme à l'invention est un autocuiseur, mais il est bien évident que l'invention peut être appliquée à tout type d'appareils de cuisson à la vapeur en atmosphère fermée mettant en oeuvre une cuve et un couvercle rapporté de manière étanche sur la cuve.

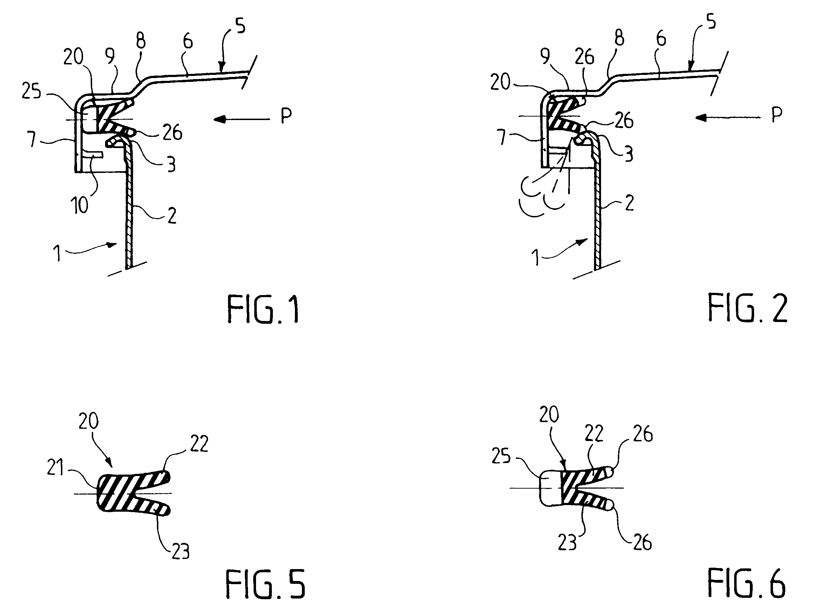

L'autocuiseur représenté de manière schématique aux figures 1 et 2 comporte une cuve métallique 1 réalisée en tous matériaux appropriés, par exemple en inox, en aluminium, ou en acier émaillé, ladite cuve étant de forme quelconque, et par exemple rectangulaire ou de préférence circulaire. La cuve 1 définit un fond (non représenté aux figures) et une enveloppe latérale délimitée par une paroi 2, sensiblement verticale, dont l'extrémité supérieure forme un bord 3 replié vers l'extérieur de la cuve 1. L'appareil conforme à l'invention comporte également un couvercle 5 comprenant un corps central 6 en forme de disque, ledit corps se terminant par une jupe périphérique 7 s'étendant à distance et sensiblement parallèlement à la paroi 2. Avantageusement le couvercle 5 présente un épaulement 8 formant à la périphérie du corps central 6, entre ce dernier et la jupe périphérique 7, une ceinture annulaire 9.

De manière connue en soi le couvercle 5 peut être verrouillé sur la cuve 1 à l'aide de moyens de verrouillage classique tels que des rampes 10 constituant des moyens de verrouillage à baïonnette agissant en association avec des contre-rampes solidaires de la cuve 1, ou à l'aide d'autres moyens de verrouillage du type à mâchoires par exemple.

Le dispositif de sécurité conforme à l'invention comporte également un joint d'étanchéité 20 interposé entre la cuve 1 et le couvercle 5. Avantageusement, le joint 20 est monté en compression dans l'espace formé par la ceinture annulaire 9, la jupe périphérique 7 et le bord 3 pour former un joint périphérique de forme identique à celle du récipient. Dans l'exemple représenté aux figures 1 à 6 le joint 20 est annulaire et circulaire.

Selon une variante préférentielle de l'invention le joint 20 est du type à lèvres, et il présente, tel que cela est montré en détail aux figures 5 et 6, une section transversale assimilable à un U dont l'âme forme la tête 21 et dont les ailes forment une lèvre supérieure 22 et une lèvre inférieure 23.

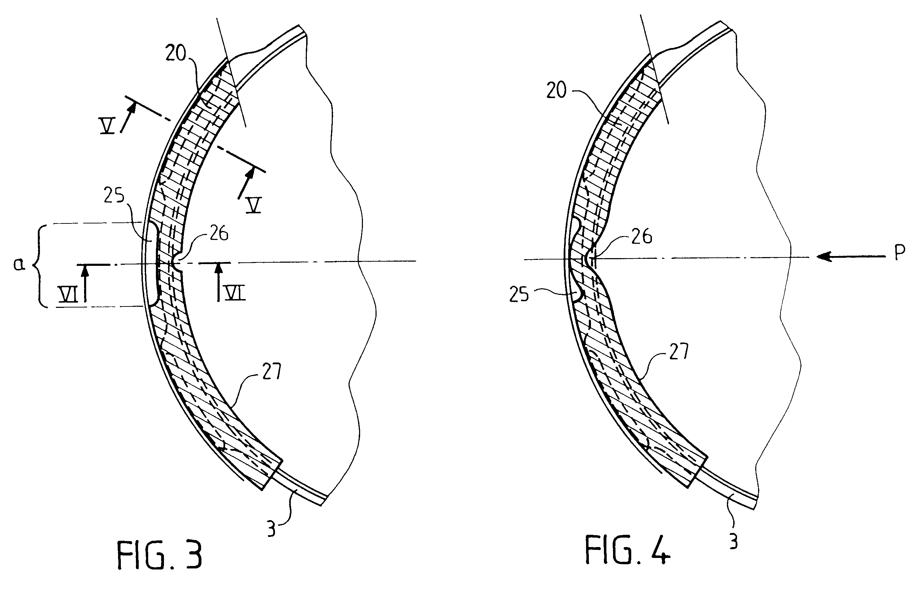

Selon une caractéristique essentielle de l'invention, le joint (20) comporte tel que cela est montré en particulier aux figures 3, 4 et 6 au moins une portion de longueur (a) présentant une section transversale dont la surface est inférieure à la section transversale moyenne du joint 20 telle que montrée à la figure 5. La réduction localisée sur une portion de longueur (a) de la section transversale du joint 20 permet de former un affaiblissement du joint sur la portion de longueur (a) considérée autorisant une déformation selon une direction radiale externe du joint dans cette portion sous l'action de la pression (p) entre les lèvres 22, 23.

Selon une version préférentielle de l'invention, la section transversale du joint 20 le long de la portion de longueur (a) présente un affaiblissement selon une direction radiale en considérant le centre de symétrie du joint 20. Selon une variante de réalisation, la section transversale affaiblie est formée tel que cela est montré aux figures 3 et 6, par un dégagement 25, ménagé de manière externe à la périphérie du joint 20, dans la masse de la tête 21. Selon la réalisation pratique montrée à la figure 3 le dégagement externe 25 s'étend sur la totalité de la portion de la longueur (a) ainsi que sur la totalité de la hauteur de la tête 21. De préférence la profondeur du dégagement est constante sur toute la portion (a). A titre de variante complémentaire elle peut cependant ne pas être constante et présenter des variations régulières ou non.

Selon la variante de réalisation préférentielle de l'invention montrée aux figures 1 à 6, la section transversale affaiblie est formée, en association avec le dégagement externe 25, par au moins une entaille 26 ménagée du côté interne du joint (20) à l'opposé et sensiblement au droit du dégagement externe 25. Dans le cas particulièrement avantageux d'utilisation d'un joint à lèvres, le dispositif de sécurité comprend deux entailles internes 26 ménagées à partir du bord 27 de chaque lèvre 22, 23 sensiblement dans la partie centrale ou médiane du dégagement externe 25.

Avantageusement chaque entaille 26 est constituée d'un demi-cercle, ménagé dans chacune des deux lèvres 22, 23 de manière que chaque entaille 26 soit située au droit l'une de l'autre. A titre de variante les entailles 26 peuvent ne pas être situées dans la partie médiane du dégagement externe 25 dès l'instant qu'elles sont situées en regard du dégagement externe 25. Les entailles internes 26 peuvent également avoir des formes autres que celles montrées aux figures 3 et 4 par exemple de forme ovale, semi-rectangulaire ou autres.

Bien évidemment, le joint 20 peut comporter à sa périphérie plusieurs portions de longueur (a) présentant une section transversale affaiblie incluant chacune un dégagement externe 25 en association avec des entailles internes 26. Selon une version particulièrement intéressante de l'invention, le joint 20 comporte douze portions de longueur présentant un affaiblissement, chacune des douze portions de longueur étant répartie régulièrement à la périphérie du joint. Un nombre inférieur ou supérieur à douze portions de longueur (a) peut être prévu.

Le fonctionnement du dispositif de sécurité conforme à l'invention est le suivant.

En fonctionnement normal le joint 20 assure l'étanchéité entre la cuve 2 et le couvercle 5. Une position normale d'étanchéité du joint est montrée aux figures 1 et 3, position dans laquelle le joint 20 est en appui par la tête 21 contre la jupe périphérique 7, la lèvre supérieure 22 étant appliquée contre la face intérieure du couvercle 5, tandis que la lèvre inférieure 23 est appliquée contre le bord 3 sous l'action de la pression (p). En fonctionnement normal la pression contenue à l'intérieur de l'autocuiseur est stabilisée par un dispositif de régulation non représenté aux figures.

Dans le cas d'une anomalie de fonctionnement du dispositif de régulation, la pression à l'intérieur de l'autocuiseur augmente. A partir d'une valeur critique de consigne le joint 20 se déforme localement au niveau de la portion de longueur (a) qui forme un affaiblissement (figure 4). La face interne du dégagement externe 25 en combinaison avec chacune des entailles 26 se déforme localement dans la direction centrifuge pour former une partie bombée. La déformation locale du joint 20 permet de libérer de façon progressive l'excès de vapeur en assurant un défaut d'étanchéité entre le joint 20 et la cuve 2 et en particulier entre l'entaille 26 de la lèvre inférieure 23 et le bord replié 3 (figures 2 et 4).

La création d'une zone localisée affaiblie sur le joint 20 évite d'avoir recours à tout aménagement spécifique du profil du couvercle 5, tout en permettant de maîtriser l'emplacement du défaut d'étanchéité. La présence d'entailles 26 facilite la progressivité de la déformation du joint 20 ce qui permet de libérer progressivement l'excès de vapeur provoquant une diminution des effets traumatisants liés au bruit et aux projections tout en assurant la stabilité de l'appareil. La maîtrise de la progressivité du fluage du joint permet également d'éviter tout risque d'extinction des feux à gaz situés sous le récipient.

## Revendications

1. Dispositif de sécurité à limitation de pression automatique pour récipient (1) sous pression comportant un joint d'étanchéité (20) interposé entre la cuve (2) du récipient (1) et le couvercle (5), ledit joint (20) comportant au moins une portion de longueur (a) présentant un dégagement externe (25) formant une section transversale affaiblie pour permettre une déformation du joint (20) dans la portion (a) sous l'action de la pression interne de fonctionnement à partir d'une valeur prédéterminée assurant un défaut d'étanchéité et la dépressurisation du récipient (1) caractérisé en ce que la section transversale affaiblie est formée par une association du dégagement externe (25) et d'au moins une entaille interne (26).

2. Dispositif selon la revendication 1 caractérisé en ce que le joint d'étanchéité (20) est un joint à lèvres (22, 23).

3. Dispositif selon la revendication 2 caractérisé en ce que le dégagement (25) est formé sur la face externe (21) du joint (20), en association avec deux entailles (26) formées au droit du dégagement (25), dans chacune des deux lèvres (22, 23), lesquelles sont situées au droit l'une de l'autre.

4. Dispositif selon l'une des revendications 1 à 3 caractérisé en ce que le joint (20) comporte à sa périphérie plusieurs portions (a) de longueur présentant une section transversale affaiblie.

5. Dispositif selon l'une des revendications 1 à 4 caractérisé en ce que le joint (20) comporte douze portions de longueur (a) réparties régulièrement sur sa circonférence.

6. Récipient sous pression, en particulier autocuiseur, pourvu d'un dispositif conforme à l'une des revendications 1 à 5.

## Claims

1. A safety device for automatically limiting pressure in a pressurized receptacle (1), the device including a gasket (20) interposed between the bowl (2) of the receptacle (1) and its lid (5), said gasket (20) including at least one length portion (a) presenting an outer recess (25) forming a weakened cross-section to allow the gasket (20) to deform in said portion (a) under drive from the internal operating pressure on reaching a predetermined pressure value, thereby breaking sealing depressurizing the receptacle (1), said device being characterized in that the weakened cross-section is formed by associating the outer recess (25) with at least one inner notch (26).

2. A device according to claim 1, characterized in that the gasket (20) is a gasket having lips (22, 23).

3. A device according to claim 2, characterized in that the recess (25) is formed on the outer face (21) of the gasket (20) in association with two notches (26) formed in register with the recess (25) in each of the two lips (22, 23) respectively, which notches are vertically aligned with each other.

4. A device according to any one of claims 1 to 3, characterized in that the gasket (20) includes a plurality of length portions (a) of weakened cross-section in its periphery.

5. A device according to any one of claims 1 to 4, characterized in that the gasket (20) includes twelve length portions (a) evenly distributed around its circumference.

6. A pressurized receptacle, in particular a pressure cooker, provided with a device according to any one of claims 1 to 5.

## Patentansprüche

1. Vorrichtung zur selbsttätigen Druckbegrenzung von Druckbehältern (1) mit einer zwischen dem Topf (2) des Behälters (1) und dem Deckel (5) eingefügten Dichtung (20), welche mindestens einen Längenabschnitt (a) mit einer äußeren Ausnehmung (25) und einem verringerten Querschnitt aufweist, so daß sich der Längenabschnitt (a) der Dichtung (20) unter Einwirkung des während des Gebrauchs erzeugten inneren Drucks bei Überschreiten eines vorbestimmten Werts verformt, wodurch eine Undichtigkeit und die Druckentlastung des Behälters (1) erzielt werden, dadurch gekennzeichnet, daß der verringerte Querschnitt durch die äußere Ausnehmung (25) in Verbindung mit wenigstens einem inneren Ausschnitt(26) gebildet ist.

2. Vorrichtung nach Anspruch 1, dadurch gekennzeichnet, daß die Dichtung (20) eine Lippendichtung (22), (23) ist.

3. Vorrichtung nach Anspruch 2, dadurch gekennzeichnet, daß die Ausnehmung (25) auf der Außenseite (21) der Dichtung (20) gebildet ist, in Verbindung mit zwei der Ausnehmung (25) gegenüberliegend in je einer der Lippen (22, 23) gebildeten Ausschnitten (26), die auf gleicher Höhe liegen.

4. Vorrichtung nach einem der Ansprüche 1 bis 3, dadurch gekennzeichnet, daß die Dichtung (20) an ihrem Umfang mehrere Längenabschnitte (a) mit verringertem Querschnitt aufweist.

5. Vorrichtung nach einem der Ansprüche 1 bis 4, dadurch gekennzeichnet, daß die Dichtung (20) zwölf an ihrem Umfang gleichmäßig verteilt angeordnete Längenabschnitte (a) aufweist.

6. Druckbehälter, insbesondere Schnellkochtopf, mit einer Vorrichtung gemäß den Ansprüchen 1 bis 5.
